Europäisches Patentamt

European Patent Office

Office européen des brevets

(19)

(11) Publication number: **0 163 366**

**A1**

(12) # EUROPEAN PATENT APPLICATION

(21) Application number: 85301489.2

(22) Date of filing: 04.03.85

(51) Int. Cl.⁴: **G 02 F 1/03**
**G 02 F 1/13**

(30) Priority: 02.04.84 US 595847

(43) Date of publication of application:
04.12.85 Bulletin 85/49

(84) Designated Contracting States:
DE FR GB

(71) Applicant: TEKTRONIX, INC.
Tektronix Industrial Park D/S Y3-121 4900 S.W. Griffith
Drive P.O. Box 500
Beaverton Oregon 97077(US)

(72) Inventor: Buzak, Thomas S.
7344 S.W. 153nd
Beaverton Oregon 97007(US)

(74) Representative: Wright, Peter David John et al,
R.G.C. Jenkins & Co. 12-15, Fetter Lane
London EC4A 1PL(GB)

(54) Electro-optic display with optimum transmissivity and viewing angle performance.

(57) An electro-optic display system maintains essentially constant transmissivity at its maximum value and develops for polar viewing angles of greater than 40% at least one optical transmission state of substantially contaminent state of substantially contaminant-free light. A first preferred embodiment (10) comprises an optical retarder system (12) which includes a variable optical retarder (18) and an optical retardation plate (20) to develop two optical transmission states of substantially contaminant-free light of different colors. A second preferred embodiment (52) comprises a pair of optical retarder systems (76 and 78), each including a variable optical retarder (80 and 84) and an optical retardation plate (82 and 86) to develop three optical transmission states of substantially contaminent-free light of different colors. The second preferred embodiment is configured to limit to one the maximum number of polarization direction changes of light rays passing through the system in each optical transmission state to further improve the viewing angle and transmissivity.

FIG.1

ELECTRO-OPTIC DISPLAY WITH OPTIMUM
TRANSMISSIVITY AND VIEWING ANGLE PERFORMANCE

Technical Field

This invention relates to electro-optic display systems, and in particular, an electro-optic display system comprising at least one optical retarder system which includes a variable optical retarder and an optical retardation plate configured to provide a display system with optimum optical transmissivity and viewing angle performance.

Background of the Invention

An electro-optic display system employing an electro-optic device, such as a liquid crystal cell, which exhibits the effects of birefringence does not transmit light of uniform intensity when the system output is observed from different locations along a viewing cone defined at an angle measured from the normal to the display surface. The nonuniform intensity of light changes the contrast of the display and is caused by the spurious transmission of contaminant light whose intensity varies as a function of azimuthal angle along the viewing cone. In the case of an electro-optic display system which develops at least two optical transmission states of light of different colors, the effect of birefringence is that light rays exiting the system in one of its optical transmission states includes contaminant light rays of the colors of the other optical transmission states, which contaminant light rays vary in intensity at different locations along the viewing cone.

There have been known heretofore methods and apparatus for improving the off-axis viewing angle performance of electro-optic display systems incorporating electro-optic devices which comprise birefringent materials. One class of patents discloses methods and apparatus for improving the viewing angle characteristics of twisted nematic liquid crystal display devices.

In particular, U.S. Patent No. 4,192,060 of Washizuka et al. discloses a twisted nematic liquid crystal cell whose transparent electrodes have undergone a horizontal orientation rubbing process to obtain a preferred director alignment and thereby improve the viewing angle characteristics of the liquid crystal cell.

U.S. Patent No. 4,183,630 of Funada et al. discloses the use of a fiber plate which includes a plurality of optical fibers positioned adjacent the outer surface of one of a pair of substrates which form an inclusion for a layer of twisted nematic liquid crystal material. The use of the fiber plate is said to preserve the uniformity of display contrast as the voltage applied to the liquid crystal cell is reduced.

U.S. Patent No. 4,120,567 of Goodman et al. discloses the method for increasing the viewing angle of a twisted nematic liquid crystal cell by increasing the ratio of the voltage applied to the cell to its threshold voltage.

U.S. Patent No. 3,966,305 of Young discloses the deposition of a dielectric layer between the patterned conductive layer and the director alignment film of a twisted nematic liquid crystal display device in an attempt to improve the viewing angle of the display.

A second class of patents discloses techniques directed to either filtering undesirable ambient light or introducing a source of back-lighting to enhance display contrast and thereby provide a more desirable viewing angle.

In particular, U.S. Patent No. 3,887,791 of Kitchens discloses the use of a prism overlaying display cells positioned in a casing to alter the angle of light transmission of the display images and thereby provide an improved viewing angle. The use of a prism, however, only shifts the angle of transmission of the display and filters undesirable ambient light. The prism does not correct for nonuniform contrast as the display is observed from different azimuthal angles of a particular cone of view.

U.S. Patent No. 3,869,195 of Aldrich et al. discloses the use of segmented back-lighting of a liquid crystal display as a means to improve the viewing angle thereof. The source of segmented back-lighting is an electroluminescent layer in which one transparent electrode applied to the electroluminescent material is segmented to coincide with the segmentation of the liquid crystal panel. The effect is to provide high intensity contrast between the activated display segments and the nonactivated areas of the display over a wide range of ambient light conditions.

A third class of patents discloses the use of ancillary optical components with electro-optic display systems to enhance display contrast.

Included in this class of patents is U.S. Patent No. 4,385,806 of Fergason which discloses a liquid crystal display having a single liquid crystal cell and at least two retardation plate devices arranged in a particular manner to improve the off-axis viewing angle performance of the display. The improvement is said to be accomplished by providing retardation plate devices whose slow axes are disposed at right angles to each other, with the net retardation of each being less than or equal to the net retardation of the liquid crystal cell.

U.S. Patent No. 4,088,400 of Assouline et al. which discloses an electro-optic display device having positioned adjacent its exit polarizer a diffuser element in association with an additional polarizer to improve the viewing angle of the display without loss of contrast. A pair of quarter-wave plates are disposed on either side of the diffuser element to eliminate back-scattering of ambient light to the observer's eye.

U.S. Patent No. 3,838,906 of Kumada discloses an optical switch comprising an electro-optic crystal and a birefringent crystal arranged in cascade in a manner such that the sign of the birefringence of the former is opposite to that of the latter. Kumada states that this arrangement of electro-optic devices provides an optical switch which can effectively block in its opaque output state light having an incident angle as great as 30°.

U.K. Patent Specification 1,462,978 of Moore discloses the inclusion of a uniaxial compensating layer in a twisted nematic liquid crystal display device as a means to improve the viewing angle of the display only when the cell is energized in its homeotropic state. The uniaxial compensating layer is selected to have an optical anisotropy of opposite sign to that of the liquid crystal layer in its homeotropic state. The inclusion of the compensating layer, however, causes a corresponding decrease in the viewing angle of the homogeneous or unenergized areas of the liquid crystal cell.

## Summary of the Invention

One of the objects of this invention is to provide an electro-optic display system which maintains essentially constant transmissivity at its maximum value and develops independent of viewing angle optical transmission states of substantially contaminant-free white light or light of different colors.

Another object of this invention is to provide such display systems which are capable of developing two or three optical transmission states of colored light and for which utilizations thereof are in field sequential display systems which form light images in, respectively, a limited or full spectral range of colors.

A further object of this invention is to provide such a display system which comprises an optical retarder system which includes a variable optical retarder and an optical retardation plate to develop independent of viewing angle at least two optical transmission states of substantially contaminant-free colored light.

Still another object of this invention is to provide such a display system which comprises a pair of optical retarder systems, each including a variable optical retarder and an optical retardation plate to develop independent of viewing angle at least three optical transmission states of substantially contaminant-free colored light.

Yet another object of this invention is to provide such a system which develops at least three optical transmission states of light of different colors with the use of a pair of variable optical retarders formed of nematic liquid crystal cells which are appropriately biased such that no more than one of them provides zero optical retardation in any one optical transmission state to develop a light output of a particular color.

The present invention relates to a viewing angle compensated electro-optic display system which is in optical communication with a source of light. The display system of the present invention includes two light polarizers, each having first and second substantially orthogonally related polarization states. An optical retardation plate is positioned between the two light polarizers. An electro-optic device which is capable of changing the sense of polarization of light rays passing therethrough is positioned between one of the light polarizers and the optical retardation plate. A preferred electro-optic device is a variable optical retarder which has a light communicating surface and is oriented so that the projection of its optic axis on the light communicating surface is disposed substantially at a right angle to the optic axis of the optical retardation plate. A control means in communication with the variable optical retarder provides independent of viewing angle at least one optical transmission state of substantially contaminant-free light in a system whose transmissivity remains essentially constant at its maximum value.

The preferred embodiments of the present invention develop optical transmission states of light of different colors and are designed to overcome the two independent causes of spurious transmission of contaminant light rays through the output of a display system in a particular optical transmission state.

The first cause of such spurious transmission of light stems from the use in a display system of an electro-optic device which does not provide a uniform change in the direction of polarization of light rays of different colors passing therethrough. The use of such an electro-optic device in a display system which includes polarizing filters having orthogonally related color selective polarization states not properly conditioned to absorb light rays of colors developed in other optical transmission states allows the transmission of these contaminant light rays along with those of the intended color of the particular optical transmission state.

For example, whenever an electro-optic device comprising a variable optical retarder configured as a zero to substantially half-wave retarder of light rays of a predetermined color is switched between its two optical retardation states, the sense of the polarization of light rays of only the predetermined color is changed by 90°. Light rays of other colors passing through the variable optical retarder in its half-wave retardation state have components in each one of the polarization states of the filters. The polarizing filters must be conditioned in both polarization states to absorb the light rays of the color which is not intended for transmission in a particular optical transmission state. If the filters are not properly conditioned, contaminant colored light rays exit the display system and are observed from any viewing angle.

The second cause of such spurious transmission of light stems from the use of an electro-optic device constructed from a birefringent material, such as a liquid crystal cell. The intensity of such contaminant light varies as a function of azimuthal angle along a viewing cone defined at an angle measured from the normal to the display surface.

A first preferred embodiment of the present invention develops two optical transmission states of substantially contaminant-free light of different colors. The first preferred embodiment includes an optical retarder system which comprises a variable optical retarder and an optical retardation plate. The variable optical retarder is a zero to substantially half-wave retarder of light of the color green, and the optical retardation plate provides half-wave retardation of light of the color green.

The optical retarder system is disposed between color selective and neutral linear polarizing filters, the polarization axes of both filters being aligned and conditioned to transmit in two optical transmission states light rays of pure colors when observed at a viewing angle normal to the display system output. The half-wave plate prevents the transmission of contaminant light caused by changes in viewing angle and maintains the transmissivity of the display system at its maximum value.

A second preferred embodiment of the present invention develops three optical transmission states of substantially contaminant-free light of different colors. The second preferred embodiment comprises three light polarizers, at least two of which include color selective linear polarizing filters. Each one of a pair of optical retarder systems as defined hereinabove is positioned between a different pair of the three polarizing filters. Each one of the variable optical retarders included in the optical retarder systems comprises a zero to substantially half-wave retarder of light of the color green.

The half-wave optical retardation plates included in the two optical retarder systems serve to eliminate the presence of viewing angle-related contaminant light rays of the colors other than the intended color of the light transmitted in a particular display system optical transmission state. The half-wave plates are tuned to provide half-wave retardation of light of the color green to match the performance of the zero to substantially half-wave optical retarder with which it is associated. The optic axis of each half-wave optical retardation plate is disposed at a right angle to the projection of the optic axis on the light communicating surface of the zero to substantially half-wave optical retarder with whicn the optical retardation plate is associated. The increase in viewing angle is accomplished by the half-wave plates without diminishing the overall transmissivity of the display system.

A control means applies a different signal to each one of the zero to substantially half-wave optical retarders to produce three optical transmission states, each providing a system light output of a different color. The control means is of a design such that no more than one of the zero to substantially half-wave retarders is biased to provide zero optical retardation in each optical transmission state. Such an arrangement of control signals, in conjunction with the color selective conditioning of the polarization axes of the three polarizing filters and the orientation of the optical components in the optical retarder systems, reduces to one the maximum number of changes in the direction of polarization of light rays passing through and exiting the display system. Minimizing the number of changes in polarization direction serves to increase the overall transmissivity of the display system. Limiting to one the number of zero to substantially half-wave optical retarders biased to provide zero optical retardation improves the viewing angle properties of the display system.

The second preferred embodiment develops light output states of the three primary colors red, green, and blue. Each one of the zero to substantially half-wave retarders is tuned to provide substantially half-wave retardation of light of the color green, which is located about mid-range in the visible spectrum, and, therefore, exhibits the approximately the same mistuning effect on light rays of the colors red and blue.

Uses of the preferred embodiments of the electro-optic display system of the present invention are, for example, in field sequential color display systems which develop optical transmission states of light of different colors to form light images in either limited or full color. The first preferred embodiment is useful for forming light images of a limited spectral range of colors, such as, for example, between the colors of red and green light exiting the display system in its two optical transmission states. The second preferred embodiment is especially useful for forming light images in full color.

Additional objects and advantages of the present invention will be apparent from the following detailed description of preferred embodiments thereof, which proceeds with reference to the accompanying drawings.

Brief Description of the Drawings

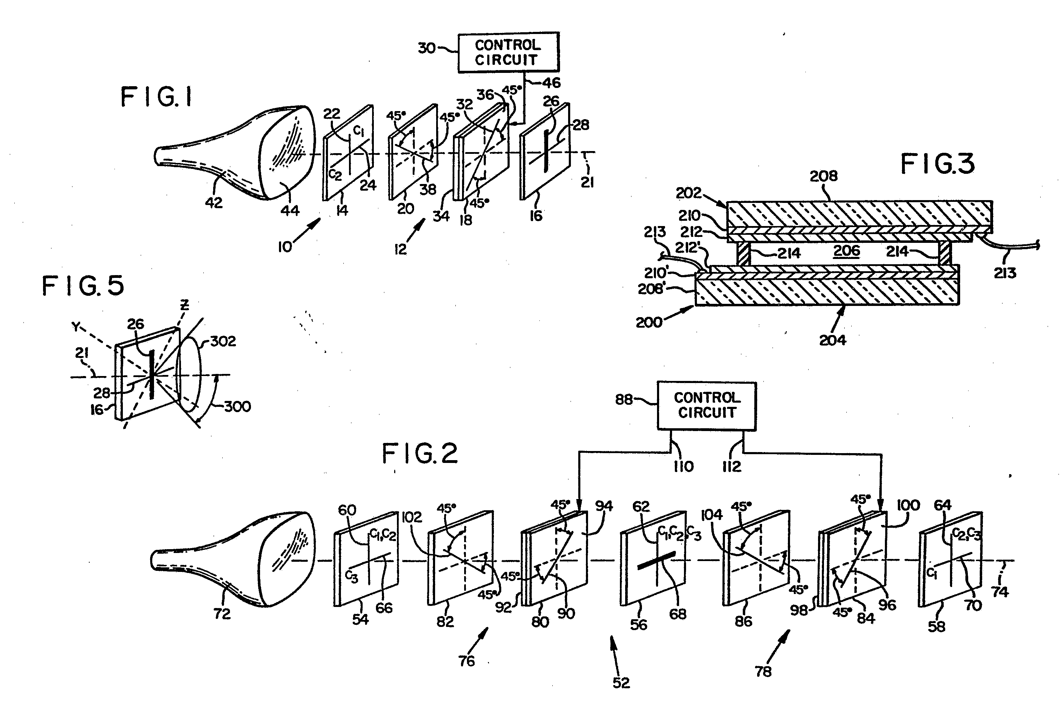

FIG. 1 is a diagram of a preferred embodiment of a display system which includes an optical retardation plate and develops a display with two optical transmission states of different colors and an overall improvement in viewing angle characteristics.

FIG. 2 is a preferred embodiment of a display system which includes a pair of optical retardation plates and develops a display with three optical transmission states of different colors and an overall improvement in viewing angle characteristics.

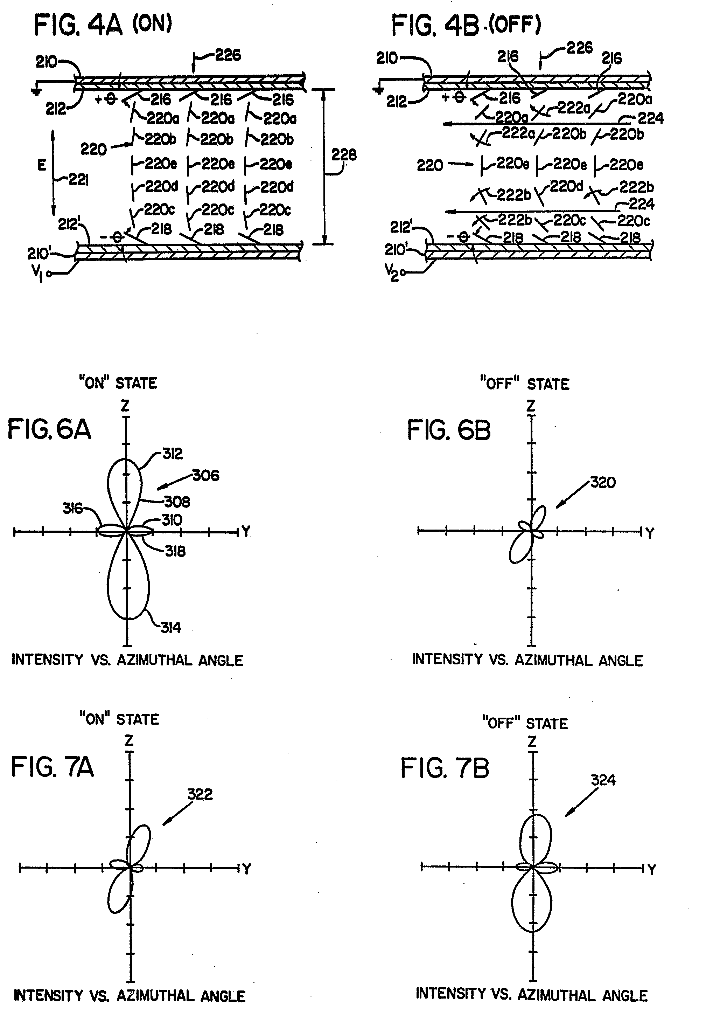

FIG. 3 is a diagrammatic cross-sectional side elevation view of the liquid crystal cell which is used as a zero to substantially half-wave optical retarder in the preferred embodiments of the present invention.

FIGS. 4A and 4B are schematic diagrams of the director alignment configuration of the liquid crystal cell of the zero to substantially half-wave optical retarder incorporated in the preferred embodiments of the display system of the present invention in, respectively, the field aligned "ON" state and the partly relaxed "OFF" state.

FIG. 5 is a diagram of the cone of view for a polar angle of 40° at the output of the display system of Fig. 1.

FIGS. 6A and 6B are contaminant color light intensity patterns measured at a polar viewing angle of 40° at the output of a viewing angle uncompensated display system of the general type of Fig. 1 (i.e., a system like that of Fig. 1 but omitting the optical retardation plate) in, respectively, its first optical transmission state and its second optical transmission state.

FIGS. 7A and 7B are contaminant color light intensity patterns measured at a polar viewing angle of 40° at the output of the display system of Fig. 1 in, respectively, its first optical transmission state and its second optical transmission state.

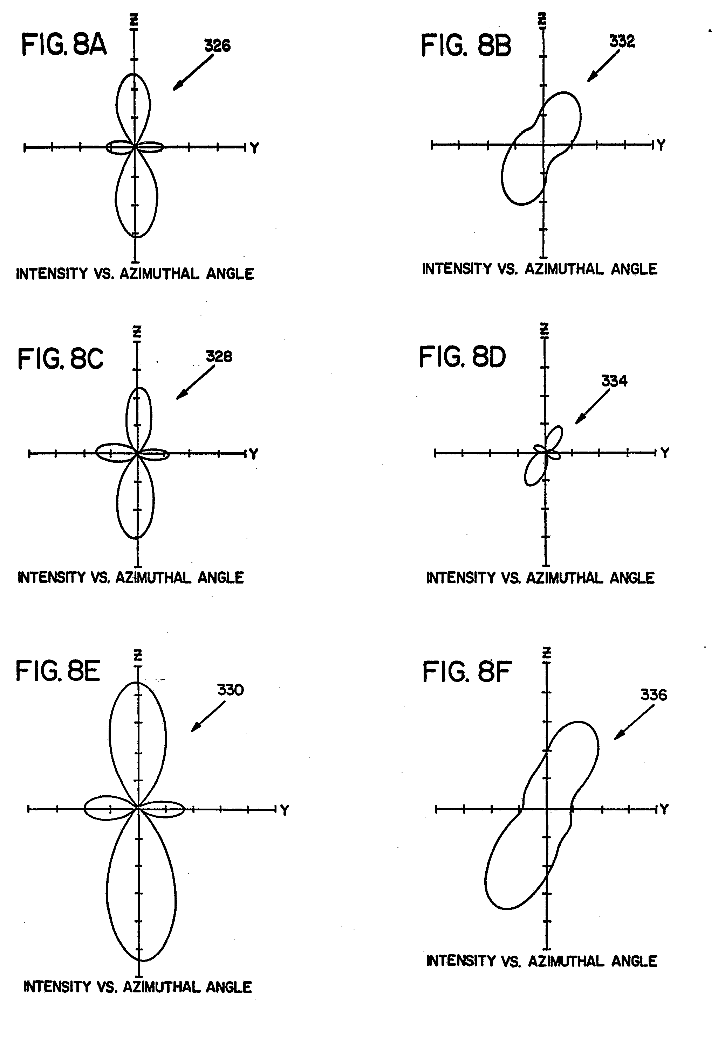

FIGS. 8A, 8C, and 8E show the contaminant light intensity patterns of the colors red, green, and blue, respectively, which are represented as a function of azimuthal angle measured at a polar viewing angle of 40° at the output of a test display system which comprises a variable optical retarder that is biased in the "ON" state.

FIGS. 8B, 8D, and 8F show the contaminant light intensity patterns of the colors red, green, and blue, respectively, which are represented as a function of azimuthal angle measured at a polar viewing angle of 40° at the output of a test display system which comprises a variable optical retarder that is biased in the "OFF" state.

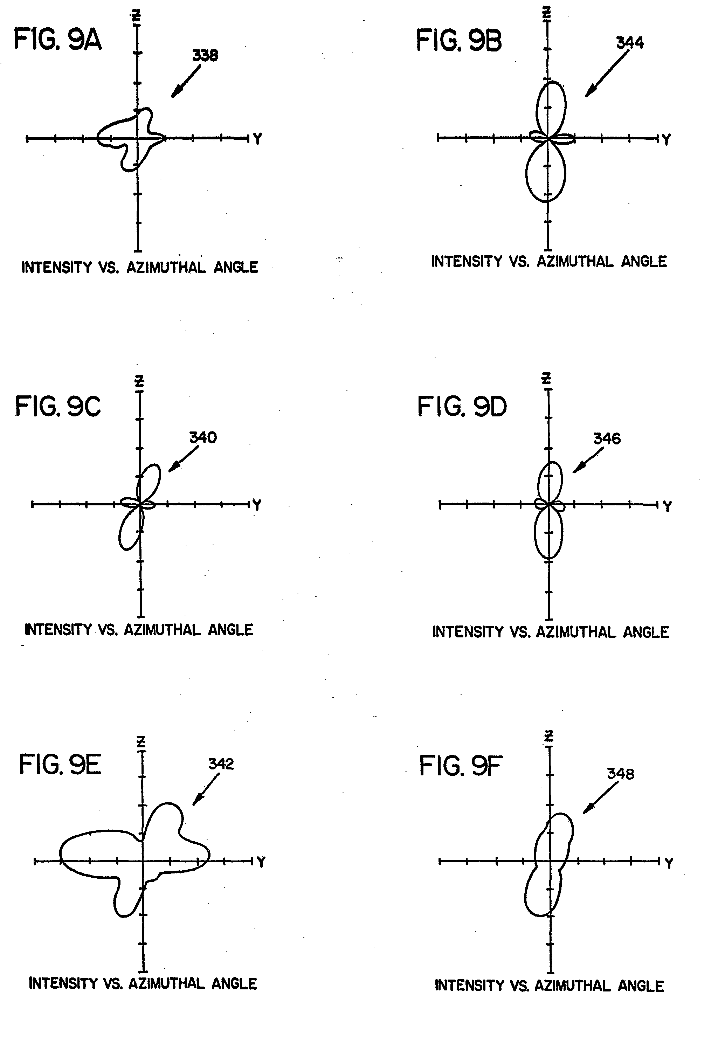

FIGS. 9A, 9C, and 9E show the contaminant light intensity patterns of the colors red, green, and blue, respectively, which are represented as a function of azimuthal angle measured at a polar viewing angle of 40° at the output of a test display system which comprises an optical retardation plate and a variable optical retarder that is biased in the "ON" state.

FIGS. 9B, 9D, and 9F show the contaminant light intensity patterns of the colors red, green, and blue, respectively, which are represented as a function of azimuthal angle measured at a polar viewing angle of 40° at the output of a test display system which comprises an optical retardation plate and a variable optical retarder that is biased in the "OFF" state.

FIGS. 10A-10C are diagrams which illustrate the effect on the optical retardation of light rays exiting a half-wave plate which is observed from, respectively, a polar angle of 0°, a polar angle of 40° at azimuthal angles of 0° and 180°, and a polar angle of 40° at azimuthal angles of 90° and 270°.

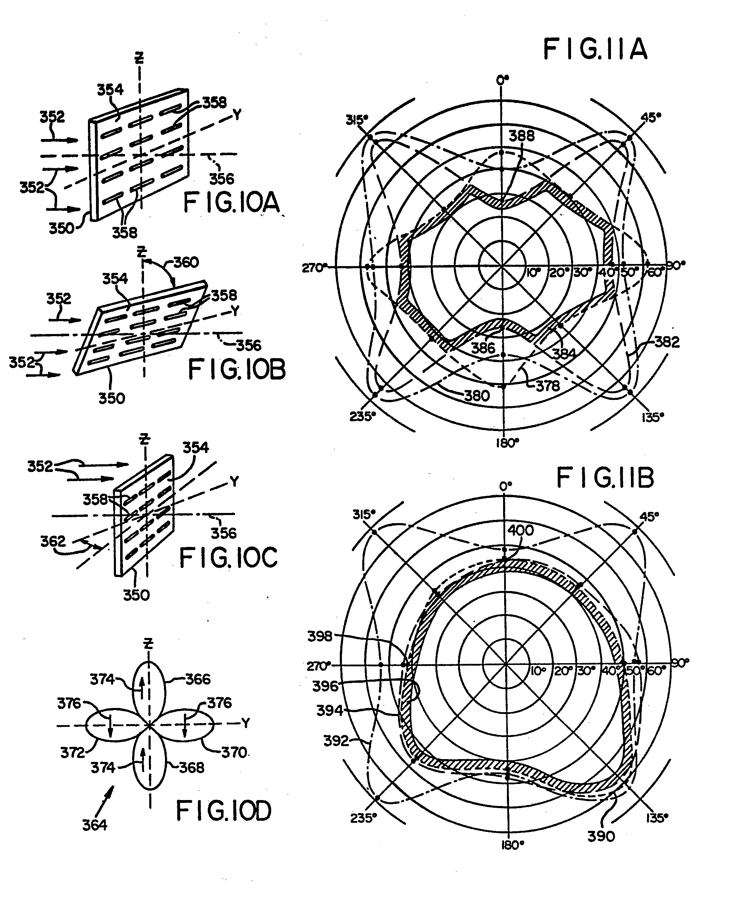

FIG. 10D shows the contaminant light intensity pattern associated with the half-wave plate of Figs. 10A-10C.

FIGS. 11A and 11B show the chromaticity variance for the color of light in each one of three optical transmission states of, respectively, a viewing angle uncompensated display system of the general type of Fig. 2 (i.e., a system like that of Fig. 2 but omitting the two optical retardation plates) and the display system of Fig. 2.

### Detailed Description of Preferred Embodiments
### Two-Color Light Output Display System

A first preferred embodiment of the present invention which develops a display with two optical transmission states and an overall improvement in viewing angle characteristics is shown in Fig. 1. With reference to Fig. 1, electro-optic display system 10 includes optical retarder system 12 which is disposed between a pair of light polarizers 14 and 16, each one of which having first and second orthogonally related polarization states or axes. Light polarizer 14 is a color selective linear polarizing filter and light polarizer 16 is a neutral linear polarizing filter which constitute, respectively, the input and the output of display system 10.

Optical retarder system 12 comprises variable optical retarder 18 which is placed in face-to-face relation with optical retardation plate 20. Variable optical retarder 18 and retardation plate 20 comprise, respectively, a zero to substantially half-wave retarder and a half-wave retarder for light rays of a predetermined color as will be further hereinafter described. Optical retarder system 12 and linear polarizers 14 and 16 are positioned in plane parallel, series arrangement along optical path 21.

Polarizing filter 14 has a color selective vertical polarization axis 22 which passes light of a first color $C_1$, such as red, and a color selective horizontal polarization axis 24 which passes light a second color $C_2$, such as green. Polarizing filter 16 has a light absorbing vertical polarization axis 26 which passes no light and a light transmitting horizontal polarization axis 28 which passes light of all wavelengths.

Variable optical retarder 18 is a nematic liquid crystal cell and comprises a zero to substantially half-wave optical retarder which selectively provides nearly zero retardation for normally incident light of all colors and substantially half-wave retardation of normally incident light of a preselected color in response to a change in magnitude of an AC voltage which is applied to the cell by control circuit 30. The projection 32 of the optic axis of variable optical retarder 18 on each of its two light communicating surfaces 34 and 36 is disposed substantially at a 45° angle with respect to each one of the polarization axes of polarizing filters 14 and 16, which axes are depicted in phantom on light communicating surface 36 of variable optical retarder 18. Variable optical retarder 18 is designed to provide substantially half-wave retardation of green light in order to provide two optical transmission states of light of different pure colors at the output of display system 10.

Optical retardation plate 20 is designed to provide substantially half-wave retardation of green light and has essentially the same retardation effect on light rays of different colors as that of variable optical retarder 18. The optic axis 38 of optical retardation plate 20 is disposed substantially at a 45° angle with respect to each one of the polarization axes of polarizing filters 14 and 16, which axes are depicted in phantom on optical retardation plate 20. Optical retardation plate 20 has no effect on the viewing angle performance of display system 10 when light rays exiting therefrom are observed at an angle normal to the surface of polarizing filter 16. The effect and proposed theory of operation of optical retardation plate 20 relating to the enhancement of the viewing angle performance of display system 10 are described hereinbelow.

The display system 10 comprising optical retarder system 12 and polarizing filters 14 and 16 is positioned in front of a light source 42, which emits light rays of many wavelengths including those of the colors red and green, to produce a selectable light output in the red and green colors. Light source 42 can be, for example, a cathode ray tube which provides a black and white display image on its phosphor screen 44.

Variable optical retarder 18 is switched between two optical retardation states, the "ON" state which provides nearly zero retardation of normally incident light of all wavelengths and the "OFF" state which provides substantially half-wave retardation for normally incident light of the wavelength of the color green. The two optical retardation states provide display system 10 with two selectable optical transmission states of which each develops a light output of one of two different colors.

Whenever variable optical retarder 18 is commanded to the "ON" optical retardation state by a voltage signal applied to output conductor 46 of control circuit 30, the directions of polarization of light rays of the colors red and green passing therethrough remain unchanged. The direction of polarization of normally incident light rays of the color green passing through horizontal polarization axis 24 of polarizing filter 14 is rotated 90° by optical retardation plate 20. Light rays of the color green are absorbed by vertical polarization axis 26 of polarizing filter 16.

The direction of polarization of normally incident light rays of the color red passing through vertical polarization axis 22 of polarizing filter 14 is rotated at an angle which is slightly different from 90° by optical retardation plate 20. Light rays of the color red, therefore, are separated into components which lie along the vertical and horizontal polarization axes of polarizing filter 16. Light rays of the color red include major components of light projected onto and transmitted by horizontal polarization axis 28 and minor components of light projected onto and absorbed by vertical polarization axis 26 of polarizing filter 16.

Red light of pure quality exits display system 10, therefore, in its first optical transmission state. The slight amount of red light absorbed by vertical polarization axis 26 of polarizing filter 16 results in a virtually imperceptible diminution in red light intensity in the first optical transmission state.

Optic axis 38 of optical retardation plate 20 and projection 32 of the optic axis of variable optical retarder 18 on its light communicating surfaces 34 and 36 are disposed at right angles; therefore, the net retardation for light rays of the colors red and green passing through optical retarder system 12 is zero. Whenever variable optical retarder 18 is commanded to the "OFF" optical retardation state by a voltage signal applied to the output conductor 46 of control circuit 30, therefore, the directions of polarization of light rays of the color red passing through vertical polarization axis 22 and of the color green passing through horizontal polarization axis 24 of polarizing filter 14 are unchanged as the light rays pass through optical retarder system 12 and strike polarizing filter 16. Normally incident light rays of the color red are absorbed by vertical polarization axis 26 and normally incident light rays of the color green exit display system 10 through horizontal polarization axis 28 of polarizing filter 16.

Green light of pure quality exits display system 10, therefore, in its second optical transmission state.

Table I summarizes the color of light exiting display system 10 in each one of the two above-described optical transmission states.

| Optical Transmission State | Variable Optical Retarder 18 | Color of Light Output |
|---|---|---|
| 1 | ON | Red |
| 2 | OFF | Green |

TABLE I

It will be appreciated that the first preferred embodiment of the present invention can be adapted to develop an opaque first optical transmission state and a second optical transmission state of white light with an overall improvement in viewing angle performance. Such adaptation would entail the replacement of color selective polarizing filter 14 by a neutral polarizing filter with its light transmitting polarization axis being orthogonally aligned with light absorbing polarization axis 26 of polarizing filter 16.

Three-Color Light Output Display System

A second preferred embodiment of the present invention which develops three optical transmission states of substantially contaminant-free light of different colors is shown in Fig. 2. With reference to Fig. 2, electro-optic display system 52 includes three light polarizers 54, 56, and 58, each one of which having first and second orthogonally related polarization states. Light polarizers 54 and 58 are color selective linear polarizing filters which constitute, respectively, the input and output of display system 52. Light polarizer 56 is a neutral linear polarizing filter. The first polarization state or axis of each polarizing filter 54, 56, and 58 is a vertical polarization axis 60, 62, and 64, respectively; and the second polarization state or axis of each polarizing filter 54, 56, and 58 is a horizontal polarization axis 66, 68, and 70, respectively.

The vertical polarization axis and the horizontal polarization axis of each polarizing filter together transmit light of the set of the primary colors red, green, and blue, which are denominated respectively, $C_1$, $C_2$, and $C_3$. Polarizing filters 54 and 58 are color selective linear polarizing filters in that each one of their polarization axes passes light rays of at least one predetermined color. Vertical polarization axis 60 of polarizing filter 54 passes light of the colors red and green, and horizontal polarization axis 66 of polarizing filter 54 passes light of the color blue. Vertical polarization axis 64 of polarizing filter 58 passes light of the colors green and blue, and horizontal polarization axis 70 of polarizing filter 58 passes light of the color red. Polarizing filter 56 is a neutral linear polarizing filter in that its vertical polarization axis 62 passes light of the colors red, green, and blue, and its horizontal polarization axis 68 absorbs light of all colors. The polarization axes of each of the three polarizing filters 54, 56, and 58 are complementary in that neither polarization axis transmits light of a primary color which is transmitted by the other polarization axis.

Light rays emitted from a light source 72 are received by polarizing filter 54 and are optically coupled to each polarizing filter to form an optical path 74 through display system 52. Light of one of the three primary colors exits through polarizing filter 58 in each optical transmission state of display system 52.

One of a pair of optical retarder systems 76 and 78 is positioned between a different pair of the three polarizing filters 54, 56, and 58. A first optical retarder system 76 comprising variable optical retarder 80 placed in face-to-face relation with optical retardation plate 82 is positioned between polarizing filters 54 and 56. A second optical retarder system 78 comprising variable optical retarder 84 placed in face-to-face relation with optical retardation plate 86 is positioned between polarizing filters 56 and 58. Polarizing filters 54, 56, and 58 and optical retarder systems 76 and 78 are positioned in plane parallel, series arrangement along optical path 74.

Each one of variable optical retarders 80 and 84 is a nematic liquid crystal cell and comprises a zero to substantially half-wave optical retarder which selectively provides nearly zero retardation for normally incident light of all colors and substantially half-wave retardation of normally incident light of a preselected color in response to a change in magnitude of AC voltage which is applied to the cell by control circuit 88.

The projection 90 of the optic axis of variable optical retarder 80 on each of its two light communicating surfaces 92 and 94 and the projection of 96 of the optic axis of variable optical retarder 84 on each of its two light communicating surfaces 98 and 100 are disposed substantially at 45° angles with respect to each one of the polarization axes of polarizing filters 54, 56, and 58, which axes are depicted in phantom on light communicating surface 94 of variable optical retarder 80 and light communicating surface 100 of variable optical retarder 84. Variable optical retarders 80 and 84 are designed to provide substantially half-wave retardation of green light in order to transmit through the output of display system 52 at polarizing filter 58 three optical transmission states of the primary colors of pure quality.

The optic axes 102 and 104 of the respective optical retardation plates 82 and 86 are disposed substantially at 45° angles with respect to each one of the polarization axes of polarizing filters 54, 56, and 58, which axes are depicted in phantom on optical retardation plates 82 and 86. Thus, the projection 90 the optic axis of variable optical retarder 80 on its light communicating surface 94 and optic axis 102 of optical retardation plate 82 are disposed at right angles, and the projection 96 of the optic axis of variable optical retarder 84 on its light communicating surface 100 and optic axis 104 of optical retardation plate 86 are disposed at right angles.

Optical retardation plates 82 and 86 are designed to provide substantially half-wave retardation of green light and have essentially the same retardation effect on light rays of different colors as that of variable optical retarders 80 and 84. Optical retardation plates 82 and 86 have no effect on the viewing angle performance of display system 52 when light rays exiting therefrom are observed at an angle normal to the surface of polarizing filter 58. The effect and proposed theory of operation of optical retardation plates 82 and 86 relating to the viewing angle performance of display system 52 is described hereinbelow.

Electro-optic display system 52 is positioned in front of light source 106, which emits from its phosphor screen 108 light rays of many wavelengths including those of the primary colors, to produce a selectable light output in the red, green, and blue colors. Light source 72 can be of the general type described for light source 42 of the display system 10.

Each one of variable optical retarders 80 and 84 is switched between two optical retardation states, the "ON" state which provides nearly zero retardation of normally incident light and the "OFF" state which provides substantially half-wave retardation for normally incident light of the wavelength of the color green. The four possible combinations of optical retardation states for the two variable optical retarders 80 and 84 provide display system 52 with four possible optical transmission states for transmitting light of different colors.

Optical transmission state 1 is defined as the light output transmission function for display system 52 whenever each one of variable optical retarders 80 and 84 is commanded to the "OFF" state by a voltage signal applied to the respective outputs 110 and 112 of control circuit 88 to provide substantially half-wave retardation of light rays of the color green. Variable optical retarders 80 and 84 biased in the "OFF" states leave unchanged the direction of polarization of light rays passing through the respective optical retarder systems 76 and 78 for the reasons described hereinabove for optical retarder system 12 of display system 10. Light rays of the colors red and green passing through vertical polarization axis 60 of polarizing filter 54, therefore, pass through vertical polarization axis 62 of polarizing filter 56 and strike vertical polarization axis 64 of polarizing filter 58. Light rays of the color red are absorbed by and light rays of the color green are transmitted through vertical polarization axis 64 of polarizing filter 58. Light rays of the color blue passing through horizontal polarization axis 66 of polarizing filter 54 are absorbed by horizontal polarization axis 68 of polarizing filter 56.

Green light of pure quality exits display system 52, therefore, in its first optical transmission state.

Optical transmission state 2 is defined as the light output transmission function for display system 52 whenever variable optical retarder 80 is commanded to the "ON" state by a voltage signal applied to output conductor 110 of control circuit 88 to provide nearly zero retardation of all wavelengths of light passing therethrough and variable optical retarder 84 is commanded to the "OFF" state by a voltage signal applied to output conductor 112 of control circuit 88 to provide substantially half-wave retardation of light of the color green.

The direction of polarization of light rays of the color red passing through vertical polarization axis 60 of polarizing filter 54 is rotated at an angle which is slightly different from 90° by optical retardation plate 82. The direction of polarization of light rays exiting retardation plate 82 is unchanged as they pass through variable optical retarder 80 in the "ON" state. Light rays of the color red, therefore, are separated into components which lie along the vertical and horizontal polarization axes of polarizing filter 56. Light rays of the color red include major components of light projected onto and absorbed by horizontal polarization axis 68 and minor components of light projected onto and transmitted by vertical polarization axis 62 of polarizing filter 56. The direction of polarization of light rays of the color red passing through vertical polarization axis 62 of polarizing filter 56 is unchanged as they pass through optical retarder system 78. Light rays of the color red strike and are absorbed by vertical polarization axis 64 of polarizing filter 58.

The direction of polarization of light rays of the color green passing through vertical polarization axis 60 of polarizing filter 54 is rotated 90° by optical retardation plate 82. Light rays of the color green pass through variable optical retarder 80 and are absorbed by horizontal polarization axis 68 of polarizing filter 56.

The direction of polarization of light rays of the color blue passing through horizontal polarization axis 66 of polarizing filter 54 is rotated at an angle which is slightly different from 90° by optical retardation plate 82. Light rays of the color blue, therefore, pass through variable optical retarder 80 and are separated into components which lie along the vertical and horizontal polarization axes of polarizing filter 56. Light rays of the color blue include major components of light projected onto and transmitted by vertical polarization axis 62 and minor components of light projected onto and absorbed by horizontal polarization axis 68 of polarizing filter 56. The direction of polarization of light rays of the color blue exiting vertical polarization axis 62 of polarizing filter 56 is unchanged as they pass through optical retarder system 78. Light rays of the color blue strike and pass through vertical polarization axis 64 of polarizing filter 58.

Blue light of pure quality exits display system 52, therefore, in its second optical transmission state. The slight amount of blue light absorbed by horizontal polarization axis 68 of polarizing filter 56 results in a virtually imperceptible diminution in blue light intensity in the second optical transmission state.

Optical transmission state 3 is defined as the light output transmission function of display system 52 whenever variable optical retarder 80 is commanded to the "OFF" state by a voltage signal applied to output conductor 110 of control circuit 88 to provide substantially half-wave retardation of light of the color green and variable optical retarder 84 is commanded to the "ON" state by a voltage signal applied to output conductor 112 of control circuit 88 to provide nearly zero retardation of all wavelengths of light passing therethrough.

The direction of polarization of light rays of the colors red and green passing through vertical polarization axis 60 and the direction of polarization of light rays of the color blue passing through horizontal polarization axis 66 of polarizing filter 54 remain unchanged as they pass through optical retarder system 76. Light rays of the colors red and green pass through vertical polarization axis 62 and light rays of the color blue are absorbed by horizontal polarization axis 68 of polarizing filter 56.

The direction of polarization of light rays of the color red passing through vertical polarization axis 62 of polarizing filter 56 is rotated at an angle which is slightly different from 90° by optical retardation plate 86. Light rays of the color red pass through through variable optical retarder 84 and include major components of light projected onto and transmitted by horizontal polarization axis 70 and minor components of light projected onto and absorbed by vertical polarization axis 64 of polarizing filter 58. The direction of polarization of light rays of the color green is rotated 90° by an optical retardation plate 86. The light rays of the color green pass through variable optical retarder 84 and are absorbed by horizontal polarization axis 70 of polarizing filter 58.

Red light of pure quality exits display system 52, therefore, in its third optical transmission state. The slight amount of red light absorbed by vertical polarization axis 64 of polarizing filter 56 results in a virtually imperceptible diminution in red light intensity in the third optical transmission state.

Table II summarizes the color of light exiting display system 52 in each one of the three above-described optical transmission states.

| Optical Transmission State | Variable Optical Retarder | | Color of Light Output |
|:---:|:---:|:---:|:---:|
| | 80 | 84 | |
| 1 | OFF | OFF | Green |
| 2 | ON | OFF | Blue |
| 3 | OFF | ON | Red |

TABLE II

It will be appreciated that the above-described arrangement and orientation of the optical components, as well as the color selective conditioning of the axes of the polarizing filters, provide three optical transmissions states of different pure colors. None of the variable optical retarders 80 and 84 was biased in the "ON" state in the first optical transmission state, and only one of the variable optical retarders 80 and 84 was biased in the "ON" state in the second and third optical transmission states. Consequently, the polarization direction of light rays propagating through and exiting display system 52 did not change in the first optical transmission state and changed only once in the second and third optical transmission states. Intrinsic light losses occur only upon changes between polarization states of light rays propagating through the display system. Thus, minimizing the number of changes between polarization states minimizes light loss in the display system. This arrangement, therefore, fulfills the objectives of simultaneously maintaining the display system transmissivity at its maximum value and developing light output states of pure colors observed over a wide range of viewing angles.

## Liquid Crystal Variable Optical Retarder

The preferred embodiments of the display system of the present invention incorporate variable optical retarders 18, 80, and 84 which comprise liquid crystal cells operating as zero to substantially half-wave optical retarders. Each such liquid crystal cell controls the retardation of light passing therethrough in response to the intensity of an electric field produced by an excitation voltage applied to the cell electrode structures. The operation of the liquid crystal cell is described herein by way of example with reference in part to display system 10 in Fig. 1. The liquid crystal cell exhibits the light intensity patterns depicted in Figs. 6A, 6B, 7A, and 7B to which reference is made hereinbelow.

With reference to Fig. 3, a liquid crystal cell 200 includes a pair of generally parallel, spaced-apart electrode structures 202 and 204 with nematic liquid crystal material 206 captured therebetween. Electrode structure 202 comprises glass dielectric substrate 208 which has on its inner surface a layer 210 of electrically conducting, but optically transparent, material such as indium tin oxide. Director alignment film layer 212 is applied to conductive layer 210 and forms a boundary between electrode structure 202 and liquid crystal material 206. The surface of film 212 which contacts the liquid crystal material is conditioned in accordance with one of two preferred methods to promote a preferred orientation of the directors of the liquid crystal material in contact therewith. The materials constituting and the corresponding methods of conditioning the director alignment film 212 are described in detail hereinbelow. Electrode structure 204 is of a construction similar to that of electrode structure 202, and the components corresponding to those of electrode structure 202 are shown with identical reference numerals followed by primes.

The short length edges of electrode structures
202 and 204 are offset relative to each other to provide
access to conductive layers 210 and 210' for connecting
at terminals 213 the conductors of the output of control
circuit 30. Spacers 214 may be comprised of any
suitable material, such as polyester film or fused glass
frit, and serve to maintain the desired separation
between electrode structures 202 and 204.

With reference to Figs. 4A and 4B, the nematic
director alignment configuration of layers 212 and 212'
in liquid crystal cell 200 is described in Column 7,
lines 48-55, of U.S. Patent No. 4,333,708 of Boyd, et
al. It will be understood, however, that the liquid
crystal cell described in the Boyd, et al. patent
differs from that of the present invention in that the
former includes an alternating-tilt geometry type
configuration of which the director alignment of cell
200 comprises only a portion. The cell of the Boyd, et
al. patent is constructed to promote disclination
movement within the cell in an attempt to provide a
bistable switching device.

The film layer 212 of electrode structure 202
is conditioned so that the electrode structure surface
contacting directors 216 are aligned parallel to each
other at a tilt bias angle $+\theta$, which is measured in the
counterclockwise sense with reference to the surface of
film layer 212. The film layer 212' of electrode
structure 204 is conditioned so that the electrode
structure surface contacting directors 218 are aligned
parallel to each other at a tilt bias angle $-\theta$ which is
measured in the clockwise sense with reference to the
surface of film layer 212'. Thus, liquid crystal cell
200 is fabricated so that the surface contacting
directors 216 and 218 of the opposed surfaces of
director alignment layers 212 and 212' of electrode
structures 202 and 204, respectively, are tilt-biased in opposite directions.

A first preferred method of effecting the desired alignment of the surface contacting directors entails the use of polyimide as the material which comprises the alignment film layers 212 and 212' on electrode structures 202 and 204, respectively. Each alignment film layer is rubbed to produce a tilt bias angle $|\Theta|$ , with 2° to 5° being the preferred range. A second preferred method of effecting the desired alignment of the surface contacting directors entails the use of silicon monoxide as the material which comprises the alignment film layers 212 and 212' of electrode structures 202 and 204, respectively. The silicon monoxide layer is evaporated and vapor deposited preferably at a 5° angle measured from the electrode structure surface in an amount sufficient to produce a tilt bias angle $|\Theta|$ of between 10° to 30°, with 15° to 25° being the preferred range.

It will be appreciated that methods for depositing silicon monoxide or other alignment materials to align liquid crystal molecules in a predetermined direction have been disclosed previously by others and are known to those having ordinary skill in the art. One such method, for example, is disclosed in U.S. Patent No. 4,165,923 of Janning.

Fig. 4A depicts the orientation of surface noncontacting directors 220 when an AC signal $V_1$ of approximately 2 kHz and 20 Vrms is applied to conductive layers 210 and 210' of electrode structures 202 and 204, respectively. The signal $V_1$ on conductive layer 210' with conductive layer 210 grounded constitutes a first switching state produced at the output of control circuit 30 and produces an alternating electric field, E, between electrode structures 202 and 204 within the liquid crystal cell 200 to force the cell into its "ON" optical retardation state. A substantial number of the surface noncontacting directors 220 of a liquid crystal material 206 which has a positive anisotropy value align essentially end-to-end along direction 221 of the electric field flux lines within the cell, which direction is normal to the conditioned surfaces of the electrode structures. Thus, when cell 200 is excited into its "ON" optical retardation state, the surface noncontacting directors 220 are aligned perpendicularly to the surfaces of the cell.

Fig. 4B depicts the orientation of surface noncontacting directors 220 after the signal $V_1$ is removed so that the alignment of surface noncontacting directors is influenced not by an electric field produced between electrode structures 202 and 204 within the cell, but by the intermolecular elastic forces which cause relaxation of the surface noncontacting directors from the end-to-end alignment of the "ON" optical retardation state. The removal of signal $V_1$ constitutes a second switching state produced at the output of control circuit 30. The director orientation shown in Fig. 4B corresponds to that of the "OFF" optical retardation state of the cell.

Switching cell 200 to the "OFF" optical retardation state can also be accomplished by applying to layer 210' of the cell an AC signal $V_2$ produced at the output of control circuit 30 having a voltage level which is less than that of signal $V_1$ and generally about 0.1 V. The frequency of signal $V_2$ is generally the same as that of signal $V_1$.

During the transition from the "ON" optical retardation state to the "OFF" optical retardation state of the liquid crystal cell, the surface noncontacting directors recede from the end-to-end alignment normal to the electrode structure surfaces and attempt to assume a generally parallel relation with the adjacent directors. Thus, surface noncontacting directors 220a and 220b rotate in a clockwise sense as shown by direction arrows 222a in order to achieve a near-parallel relation as respects directors 216 and 220a, respectively; and surface noncontacting directors 220c and 220d rotate in a counterclockwise sense as shown by direction arrows 222b to achieve a near-parallel relation as respects directors 218 and 220c, respectively. Thus, when cell 200 relaxes to its "OFF" optical retardation state, each one of a substantial number of the surface noncontacting directors is aligned so that it projects a director component onto the surfaces of the cell. The surface noncontacting directors, however, lie approximately in a plane which is perpendicular to the surfaces of the cell.

The method of operating the liquid crystal cell 200 as a zero to substantially half-wave optical retarder is directed to the disclination-free surface noncontacting director relaxation from the electric field aligned or "ON" optical retardation state depicted by Fig. 4A to the planar configuration or "OFF" optical retardation state depicted by Fig. 4B.

In the present invention, liquid crystal cell 200 is operated as a zero to substantially half-wave optical retarder whose optic axis corresponds to the alignment direction of the nonsurface contacting directors 220.

Linearly polarized light which propagates in direction 226 normal to the surfaces of electrode structures 202 and 204 is coincident with the direction of surface noncontacting directors 220 when the liquid crystal cell is in the "ON" optical retardation state. Directors 220 are oriented in such "ON" optical retardation state so that there is a negligible projection of the optic axis on the electrode structure surfaces of the cell. Under these conditions, liquid crystal cell 200 produces substantially reduced optical retardation for incident light propagating in the direction 226.

Linearly polarized light which propagates in direction 226 normal to the surfaces of electrode structures 202 and 204 is noncoincident with the alignment direction of surface noncontacting directors when the liquid crystal cell is in the "OFF" optical retardation state. Directors 220 are oriented in such "OFF" optical retardation state so that each one of a substantial number of them projects a component on the electrode structure surfaces of the cell. Under these conditions, liquid crystal cell 200 has an effective birefringence for generally normally incident light. The orientation of surface noncontacting directors 220 provides substantially half-wave optical retardation for light of the wavelength which satisfies the mathematical expression:

$$\frac{\Delta nd}{\lambda} = \frac{1}{2}$$

where d represents the thickness 228 and $\Delta n$ represents the effective birefringence of the cell.

## Use of the Optical Retardation Plate
## to Improve Viewing Angle

The light rays exiting polarizing filters 16 and 58 of the respective display systems 10 and 52 in each one of their optical transmission states appear to be of pure color quality to an observer whose line-of-sight or viewing angle is normal to the output of the system. Optical retardation plate 20 and optical retardation plates 82 and 86 are included in the preferred embodiments of the present invention to inhibit substantially in a selected optical transmission state the transmission of contaminant light rays of the colors of the other optical transmission state or states when a display system is observed from an off-axis viewing angle.

The effect of the optical retardation plate on the viewing angle performance of the present invention is described in detail by way of example with reference to display system 10 in Fig. 1. Fig. 5 shows for a polar angle 300 of 40° the cone of view 302 for an observer of the light rays exiting polarizing filter 16 of display system 10. Figs. 6A and 6B show contaminant color light intensity patterns represented as a function of azimuthal angle measured at a polar viewing angle of 40° at the output of a viewing angle uncompensated display system which is a modified version of display system 10 having optical retardation plate 20 removed. Green light and red light exit the uncompensated display system when the variable optical retarder is biased to, respectively, the "ON" state and the "OFF" state. The Z and Y axes of Figs. 6A and 6B coincide with, respectively, projection 32 of the optic axis of variable optical retarder 18 and optic axis 38 of optical retardation plate 20 prior to its removal.

Fig. 6A shows the intensity pattern of the red contaminant light exiting the uncompensated display system when its variable optical retarder is commanded to the "ON" state and, therefore, the uncompensated display system is in its first optical transmission state. Pattern 306 represents the intensity of the contaminant red light and resembles the outline of a pair of orthogonally oriented figure eight shapes 308 and 310. Lobes 312 and 314 of figure eight shape 308 are aligned generally symmetrically about the Z axis, and lobes 316 and 318 of figure eight shape 310 are aligned generally symmetrically about the Y axis. Since the intensity varies as a function of azimuthal angle, the intensity nulls occur at azimuthal angles measured at approximately 45° with respect to the Z and Y axes. The shape of the outline of pattern 306 is well-known as being representative of that exhibited by liquid crystal cells of various types.

Fig. 6B shows the intensity pattern of the contaminant green light exiting the uncompensated system when its variable optical retarder is commanded to the "OFF" state and, therefore, the uncompensated display system is in its second optical transmission state. Pattern 320 represents the intensity of contaminant green light. The number, orientation, and shape of the lobes included in the outline of pattern 320 are unique to the liquid crystal cell of the preferred embodiment of the variable optical retarder whose construction and method of operation are described hereinabove. The characteristics shown in Figs. 6A and 6B are representative of such a liquid crystal cell having an alignment film layer of rubbed polyimide material and tuned to provide half-wave retardation of green light.

Figs. 7A and 7B show contaminant color light intensity patterns represented as a function of azimuthal angle at a polar viewing angle of 40° at the output of display system 10, which includes optical retardation plate 20. The Z and Y axes of Figs. 7A and 7B are the same as those defined for Figs. 6A and 6B.

Fig. 7A shows the intensity pattern of contaminant green light exiting polarizing filter 16 when variable optical retarder 18 is commanded to its "ON" state and, therefore, display system 10 is in its first optical transmission state. Pattern 322 represents the intensity of the contaminant green light and is of the same general shape as, but with a substantially reduced intensity relative to, pattern 306 of Fig. 6A.

Fig. 7B shows the intensity pattern 324 of the contaminant red light exiting polarizing filter 16 when variable optical retarder 18 is commanded to its "OFF" state and, therefore, display system 10 is in its second optical transmission state.

Although the "ON" state contaminant red light intensity pattern 306 of Fig. 6A is larger than the "ON" state contaminant green light intensity pattern 322 of Fig. 7A, the "OFF" state contaminant red light intensity pattern 324 of Fig. 7B is larger than the "OFF" state contaminant green light intensity pattern 320 of Fig.
6B. Thus, utilization of optical retardation plate 20
improves the viewing angle characteristic of the "ON"
state but slightly degrades that of the "OFF" state.
This trade-off in viewing angle performance is
acceptable for two reasons.

First, the diminution of "ON" state contaminant
light intensity is greater than the increase in "OFF"
state contaminant light intensity. Since the viewing
angle performance of the test display system, from which
the optical retardation plate is absent, is
substantially superior in the "OFF" state, it is
desirable to improve the viewing angle performance of
the "ON" state at the expense of that of the "OFF" state.

Second, the "ON" state contaminant light
intensity pattern tends to grow at a faster rate as a
function of increasing polar viewing angle than the
"OFF" state contaminant light intensity pattern.
Improving the viewing angle characteristic of the "ON"
state at the partial expense of that of the "OFF" state
provides an overall increase in display system viewing
angle performance.

A substantial viewing angle performance
improvement is obtained in the three-color light output
display system 52, which incorporates optical
retardation plates 82 and 86. Figs. 8A-8F show the
contaminant color light intensity patterns represented
as a function of azimuthal angle at a polar viewing
angle of 40° at the outputs of test display systems
configured as described hereinbelow.

The first test display system, which is
utilized in measuring the contaminant light intensity
patterns shown in Figs. 8A-8F, includes a liquid crystal
variable optical retarder of the design as was described
hereinabove. The variable optical retarder is tuned to
provide half-wave retardation of green light. Light
rays of the colors red, green, and blue are directed one color at a time at the test display system input to develop the contaminant light intensity patterns shown in, respectively, Figs. 8A and 8B, Figs. 8C and 8D, and Figs. 8E and 8F. The Z and Y axes of Figs. 8A-8F coincide with, respectively, the projection of the optic axis of the variable optical retarder and an imaginary line disposed at 45° angles with respect to the axes of the neutral polarizing filters.

The patterns shown in Figs. 8A, 8C, and 8E are developed at the output of the first test display system in which the variable optical retarder is biased in the "ON" state and is disposed between a pair of crossed neutral polarizing filters. Patterns 326, 328, and 330 represent the intensities of, respectively, red, green, and blue contaminant light.

The patterns shown in Figs. 8B, 8D, and 8F are developed at the output of the first test display system in which the variable optical retarder is biased in the "OFF" state and is disposed between a pair of parallel neutral polarizing filters. Patterns 332, 334, and 336 represent the intensities of, respectively, red, green, and blue contaminant light.

The second test display system, which is utilized in measuring the contaminant light intensity patterns shown in Figs. 9A-9F, includes an optical retardation plate disposed face-to-face to a liquid crystal variable optical retarder of the design as was described hereinabove. The variable optical retarder is tuned to provide half-wave retardation of green light. Light rays of the colors red, green, and blue are directed one color at a time at the display system input to develop the contaminant light intensity patterns shown in, respectively, Figs. 9A and 9B, Figs. 9C and 9D, and Figs. 9E and 9F. The Z and Y axes of Figs. 9A-9F coincide with, respectively, the projection of the optic axis of the variable optical retarder and the optic axis of the optical retardation plate.

The patterns shown in Figs. 9A, 9C, and 9E are developed at the output of the second test display system in which the variable optical retarder is biased in the "ON" state and, along with the optical retardation plate, is disposed between a pair of crossed neutral polarizing filters. Patterns 338, 340, and 342 represent the intensities of, respectively, red, green, and blue contaminant light.

The patterns shown in Figs. 9B, 9D, and 9F are developed at the output of the second test display system in which the variable optical retarder is biased in the "OFF" state and, along with the optical retardation plate, is disposed between a pair of parallel neutral polarizing filters. Patterns 344, 346, and 348 represent the intensities of, respectively, red, green, and blue contaminant light.

Each one of the contaminant light intensity patterns shown in Figs. 9A-9F is either about as small as or smaller than its corresponding contaminant light intensity pattern shown in Figs. 8A-8F. This reduction in contaminant light intensity results in an overall improvement in the viewing angle performance of the three-color light output display system. The proposed theory underlying the reasons for the improved performance are set forth hereinbelow with reference to Figs. 10A-10D.

Fig. 10A is a schematic diagram of a half-wave optical retardation plate 350 which receives normally incident light rays 352 that are observed from a viewing angle normal to its output light communicating surface 354 along line-of-sight 356. It is assumed that light rays 352 are of the wavelength for which half-wave plate 350 provides half-wave optical retardation. The elongated "cigar-shaped" molecules 358 of half-wave plate 350 are disposed in end-to-end alignment and are arranged in horizontal rows along the surface 354. The optic or slow axis of the half-wave plate is defined by the alignment direction of molecules 358 and is denominated the Y axis in Figs. 10A-10D. The Z axis is perpendicular to the Y axis in the plane of half-wave plate 350. The fast axis of the half-wave plate extends radially and outwardly of molecules 358.

The effect of a change in viewing angle of light rays 352 passing through half-wave plate 350 is determined with reference to Figs. 10B and 10C. With reference to Fig. 10B, half-wave plate 350 is rotated out of the vertical plane at an angle 360 of 40° measured relative to the Z axis in a clockwise direction to demonstrate the effect of a viewing angle of 40° at azimuthal angles of approximately 0° and 180°. Since molecules 358 in a half-wave plate of finite thickness are aligned parallel to surface 354, there is no change in birefringence of half-wave plate 350 when it is rotated as indicated. Such rotation of half-wave plate 350 does increase the distance light rays 352 must propagate through the plate. The increase in propagation distance can be represented as an effective increase in the thickness of half-wave plate 350, and the consequent increase in the optical retardation of half-wave plate 350 is indicated by the expression for optical retardation:

$$\delta = \frac{\Delta nd}{\lambda}$$

where $\delta$ is the optical retardation, $\Delta n$ is the birefringence, and d is the thickness of half-wave plate 350. Since the wavelength $\lambda$ of light rays 352 and the birefringence $\Delta n$ remain constant, the effective increase in d necessarily causes an increase in optical retardation. The result is, therefore, a net increase in optical retardation when half-wave plate 350 is viewed from a polar angle of 40° at azimuthal angles of 0° and 180°.

With reference to Fig. 10C, half-wave plate 350 is rotated within the vertical plane at an angle 362 of 40° measured relative to the Y axis in a counterclockwise direction to demonstrate the effect of a viewing angle of 40° at azimuthal angles of approximately 90° and 270°. Since the lengths of molecules 358 aligned along the surface 354 are effectively shortened when observed at a viewing angle of 40° with half-wave plate 350 rotated as indicated, the birefringence of half-wave retardation plate 350 decreases. Such rotation of half-wave plate 350 also causes an increase in the distance light rays 352 must propagate through the plate and a consequent increase in optical retardation. It is well-known that under these conditions, the decrease in birefringence $\Delta n$ is larger than the increase in thickness d. The result is, therefore, a net decrease in optical retardation when half-wave plate 350 is viewed from a polar angle of 40° at azimuthal angles of 90° and 270°.

Fig. 10D shows a light intensity pattern 364 developed for half-wave optical retardation plate 350 which is disposed between a pair of parallel linear polarizing filters and is observed from a polar viewing angle of 40°. Pattern 364 comprises lobes 366 and 368 which are generally symmetrically aligned about the Z axis and correspond to regions of increasing optical retardation as was demonstrated with reference to Fig. 10B. Pattern 364 also comprises lobes 370 and 372 which are generally symmetrically aligned about the Y axis and correspond to the regions of decreasing optical retardation as was demonstrated with reference to Fig. 10C. The Y and Z axes correspond to those of Figs. 10A-10D.

The foregoing analysis relating to Figs. 10A-10D is of use in explaining the operation of display system 10 in Fig. 1. The previously described characteristics of half-wave plate 350 correspond to those of optical retardation plate 20 of display system 10. The reference numerals shown in Figs. 10A-10D in connection with half-wave plate 350 are also used herein with reference to optical retardation plate 20.

It is apparent from Fig. 6A that the greatest amount of contaminant light intensity exits the test system, from which the optical retardation plate is absent, when the variable optical retarder is biased in the "ON" state. Optical retardation plate 20 is included in display system 10, therefore, primarily to improve the viewing angle performance in the first optical transmission state. Whenever the liquid crystal cell of the preferred embodiment of the variable optical retarder is biased in the "ON" state, its surface noncontacting directors are generally normally disposed to the light communicating surfaces of the cell. There is an increase in birefringence of and light ray propagation distance through the variable optical retarder for light rays exiting the display system and observed from an angle other than normal to the light communicating surface of the cell. There is, therefore, a consequent increase in optical retardation for light rays observed off-axis from any viewing angle.

The combination of half-wave retardation plate 20 and variable optical retarder 18 in its "ON" state substantially inhibits the transmission of contaminant light rays from display system 10 due to a change in viewing angle for the following reasons. Light intensity pattern 364 in Fig. 10D, which was developed with reference to half-wave plate 350 disposed between two parallel polarizers and observed from a polar viewing angle of 40°, also characterizes the performance of optical retardation plate 20 in display system 10.

With reference to pattern 364 in Fig. 10D, the upwardly directed arrows 374 shown in conjunction with lobes 366 and 368 represent regions of increasing optical retardation as a function of azimuthal angle, and the downwardly directed arrows 376 shown in conjunction with lobes 370 and 372 represent regions of decreasing optical retardation as a function of azimuthal angle.

Since the optical retardation of variable optical retarder 18 in its "ON" state increases for all off-axis viewing angles, the regions of lobes 370 and 372 of decreasing retardation of optical retardation plate 20 and the overlapping regions of increasing optical retardation on the light communicating surfaces of variable optical retarder 18 generally compensate so that a substantially reduced amount of contaminant light exits display system 10 in these regions due to changes in viewing angle.

The regions of lobes of 366 and 368 of increasing retardation of optical retardation plate 20 overlap regions of increasing optical retardation on the light communicating surfaces of variable optical retarder 18. The increasing retardation in the regions of lobes 366 and 368 was produced by the rotation of half-wave plate 350 out of the vertical plane. Such rotation of optical retardation plate 20 in conjunction with variable optical retarder 18 causes a change in the relative alignment of the optic axes of both optical components.

Whenever an incident light ray illuminates optical retarder system 12 which is rotated in the vertical plane as was indicated for half-wave plate 350 in Fig. 10C, the light ray can be resolved into two components. One of the components projects onto the fast axis and the other component projects onto the slow axis of optical retardation plate 20. The component of light projected onto the fast axis of optical retardation plate 20 propagates in the direction along the fast axis of variable optical retarder 18. Similarly, the component of light projected onto the slow axis of optical retardation plate 20 propagates in a direction along the slow axis of variable optical retarder 18.

Since there is no interchange of light ray components from the fast and slow axes of optical retardation plate 20 to the respective slow and fast axes of variable optical retarder 18, the amounts of optical retardation produced by optical retardation plate 20 and variable optical retarder 18 add to develop a net retardation which characterizes optical retarder system 12.

The rotation of the components of optical retarder system 12 as indicated develops a negative change in optical retardation by optical retardation plate 20 and a positive change in optical retardation by variable optical retarder 18. The sum of these optical retardation quantities of opposite sign provides a net optical retardation which results in a reduction in contaminant light ray transmission through the display system.

Whenever an incident light ray illuminates optical retarder system 12 which is rotated out of the vertical plane as was indicated for half-wave plate 350 in Fig. 10B, the component of light which was projected onto the fast axis of optical retardation plate 20 intercepts the slow axis of variable optical retarder 18. Similarly, the component of light which was projected onto the slow axis of optical retardation plate 20 intercepts the fast axis of variable optical retarder 18.

Since there exists an interchange of light ray components from the fast and slow axes of optical retardation plate 20 to the respective slow and fast axes of variable optical retarder 18, the increase in optical retardation provided by optical retardation plate 20 is substantially offset by the reduction in optical retardation provided by variable optical retarder 18.

The reason is that both optical retardation plate 20 and variable optical retarder 18 provide positive changes in optical retardation whenever optical retarder system 12 is rotated as described. The net retardation of optical retarder system 12 represents the difference between the optical retardation introduced by each of its two components because of the interchange of light components from a particular relative speed axis of optical retardation plate 20 to the opposite relative speed axis of variable optical retarder 18. The net retardation results in a reduction in contaminant light ray transmission through the display system.

Therefore, the regions of lobes 366 and 368 of optical retardation plate 20 and the overlapping regions of the light communicating surfaces of variable optical retarder 18 in which directional relative realignment of the optic axes occurs generally compensate so that a substantially reduced amount of contaminant light exits display system 10 in these regions due to changes in viewing angle.

Although it has been directed specifically to display system 10, the foregoing analysis also applies to display system 52 in which optical retardation plates 82 and 86 provide outstanding viewing angle improvement in the three optical transmission states of color light.

Figs. 11A and 11B illustrate viewing angle performance as a function of azimuthal angle for a 0.05 chromaticity variance for two full color display systems of the type of display system 52. Chromaticity variance is defined in the u'v' color space as the distance of a color point $(u'_p, v'_p)$ from the point $(u'_n, v'_n)$, the latter point representing the chromaticity of the color when viewed from an angle normal to the output of the display. The chromaticity variance can be expressed as:

$$\sqrt{(\Delta u')^2 + (\Delta v')^2}$$

where $\Delta u' = (u'_n - u'_p)$ and $\Delta v' = (v'_n - v'_p)$.

Fig. 11A represents the viewing angle performance of a viewing angle noncompensated display system of the general type of Fig. 2 in which optical retardation plates 82 and 86 are absent. Patterns 378, 380, and 382 represent the chromaticity variance of light rays of the respective primary colors red, green, and blue. The outer perimeter of the slanted line pattern 384 represents the intersection of the regions in which the chromaticity variance of each one of the red, green, and blue colors is less than or equal to 0.05. Locations 386 and 388 of pattern 384 indicate that polar viewing angles of less than or equal to about 28° provide a chromaticity variance of 0.05 for the three primary colors at all azimuthal angles.

Fig. 11B represents the viewing angle performance of display system 52, in which optical retardation plates 82 and 86 are present. Patterns 390, 392, and 394 represent the chromaticity variance of light rays of the respective primary colors red, green, and blue. The outer perimeter of the slanted line pattern 396 represents the intersection in which the chromaticity variance of each one of the red, green, and blue colors is less than or equal to 0.05. Locations 398 and 400 of pattern 396 indicate that polar viewing angles of less than or equal to about 43° provide a chromaticity variance of 0.05 for the three primary colors at all azimuthal angles.

The use of optical retardation plates 82 and 86 in display system 52, therefore, provides a viewing angle augmentation of 15° (or 54%) over that of an uncompensated system of a similar design. In addition, a comparison of Figs. 11A and 11B indicates that the solid angle or cone of view over which there is good viewing angle performance is substantially enhanced with the use of optical retardation plates 82 and 86.

It will be obvious to those having skill in the art that many changes may be made in the above-described details of the preferred embodiments of the present invention. The scope of the present invention, therefore, should be determined only by the following claims.

CLAIMS

1. A viewing angle compensated electro-optic display system in optical communication with a source of light, comprising:

two light polarizers, each one of the two light polarizers having first and second substantially orthogonally related polarization states;

an optical retardation plate positioned between the two light polarizers;

a variable optical retarder having a light communicating surface and being positioned between one of the light polarizers and the optical retardation plate so that the projection of its optic axis on the light communicating surface is disposed substantially at a right angle to the optic axis of the optical retardation plate; and

control means in communication with the variable optical retarder to provide independent of viewing angle an optical transmission state of substantially contaminant-free light in a system whose transmissivity remains essentially constant at its maximum value.

2. The display system of claim 1 in which at least one of the two light polarizers comprises a color selective polarizing filter and the source of light emits light rays of a plurality of wavelengths, thereby to provide two optical transmission states of substantially contaminant-free light of different colors.

3. The display system of claim 2 in which the first and second substantially orthogonally related polarization states of the color selective polarizing filter are characterized in that neither polarization state passes light of a color which is passed by the other polarization state.

4. The display system of claim 1 in which the variable optical retarder comprises a zero to substantially half-wave retarder of light rays of a predetermined wavelength.

5. The display system of claim 4 in which at least one of the two light polarizers comprises a linear polarizing filter so that the first and second polarization states of the linear polarizing filter constitute orthogonally aligned polarization axes, the optical retardation plate and the linear polarizing filter being aligned so that the optic axis of the optical retardation plate is disposed at substantially 45° angles with respect to the polarization axes of the linear polarizing filter.

6. The display system of claim 1 in which the optical retardation plate provides substantially half-wave retardation of light rays of a predetermined color.

7. A viewing angle compensated electro-optic display system in optical communication with a source of light, comprising:

two light polarizers, each one of the two light polarizers comprising a linear polarizing filter which has first and second substantially orthogonally aligned polarization axes;

an optical retardation plate positioned between the two polarizing filters so that the optic axis of the optical retardation plate is disposed at substantially 45° angles with respect to the polarization axes of the polarizing filters;

an electro-optic device which is capable of changing the direction of polarization of light rays passing therethrough, the electro-optic device being positioned between one of the polarizing filters and the optical retardation plate; and

control means in communication with the electro-optic device to provide independent of viewing angle an optical transmission state of substantially contaminant-free light in a system whose transmissivity remains essentially constant at its maximum value.

8. The display system of claim 7 in which at least one of the two linear polarizing filters comprises a color selective polarizing filter and the source of light emits light rays of a plurality of wavelengths, thereby to provide two optical transmission states of substantially contaminant-free light of different colors.

9. The display system of claim 8 in which the first and second substantially orthogonally aligned polarization axes of the color selective polarizing filter are characterized in that neither polarization axis passes light of a color which is passed by the other polarization axis.

10. The display system of claim 7 in which the electro-optic device comprises a variable optical retarder.

11. The display system of claim 10 in which the variable optical retarder comprises a zero to substantially half-wave retarder and the optical retardation plate comprises a half-wave retarder of light rays of the same predetermined wavelength.

12. A viewing angle compensated electro-optic display system in optical communication with a source of light, comprising:

three light polarizers in optical communication with the source of light, two of the three light polarizers including color selective polarizing filters;

first and second optical retarder systems, each one of the optical retarder systems including a variable optical retarder and an optical retardation plate and being positioned between a different pair of the three light polarizers; and

control means in communication with the variable optical retarders of the first and second optical retarder systems to selectably provide in a system whose transmissivity remains essentially constant at its maximum value a light output of one of at least three substantially contaminant-free colors when observed from different viewing angles.

13.   The display system of claim 12 in which each one of the variable optical retarders of the first and second optical retarder systems includes a zero optical retardation state and a substantially half-wave optical retardation state.

14.   The display system of claim 13 in which the control means actuates the variable optical retarders such that no more than one of them provides zero optical retardation to develop a light output of a particular color.

15.   The display system of claim 14 in which the variable optical retarders of the first and second optical retarder systems are tuned to provide substantially half-wave retardation of light of the same color.

16.   The display system of claim 12 in which the optical retardation plates of the first and second optical retarder systems provide substantially half-wave retardation of light of a predetermined color.

17.   The display system of claim 12 in which each one of the three light polarizers comprises a linear polarizing filter having orthogonally aligned first and second polarization axes which are oriented at substantially 45° angles with respect to the optic axes of the optical retardation plates.

18.   The display system of claim 17 in which the first and second polarization axes of each linear polarizing filter are characterized in that neither polarization axis passes light of a color which is passed by the other polarization axis.

19.   The display system of claim 12 in which the source of light is a cathode ray tube emitting a black and white image which includes components of the wavelengths of light transmitted by the color selective polarizing filters.

20.   The display system of claim 12 in which each one of the variable optical retarders has a light communicating surface and is oriented so that the projection of its optic axis on the light communicating surface is disposed substantially at a right angle to the optic axis of one of the optical retardation plates.

FIG.1

CONTROL CIRCUIT

FIG.3

FIG.5

FIG.2

CONTROL CIRCUIT

1/5

0163366

## FIG. 4A (ON)

210 — 226
212 — +
+ ⊖ — 216 — 216 — 216
220a — 220a — 220a
220 — 220b — 220b — 220b
E
221
220e — 220e — 220e
220d — 220d — 220d
220c — 220c — 220c
212' — 218 — 218 — 218
210'
V₁ — ⊖
228

## FIG. 4B (OFF)

210 — 216 — 226 — 216
212 — +
+ ⊖ — 216 — 216
220a — 222a — 224
222a — 220b — 220b
220 — 220e — 220e — 220e
220d — 222b — 220d — 222b
224
222b — 220c — 220c
212' — ⊖ — 218 — 218 — 218
210'
V₂

### "ON" STATE

## FIG. 6A

Z

312
306
316
308
310
318
Y

314

INTENSITY VS. AZIMUTHAL ANGLE

### "OFF" STATE

## FIG. 6B

Z

320

Y

INTENSITY VS. AZIMUTHAL ANGLE

### "ON" STATE

## FIG. 7A

Z

322

Y

INTENSITY VS. AZIMUTHAL ANGLE

### "OFF" STATE

## FIG. 7B

Z

324

Y

INTENSITY VS. AZIMUTHAL ANGLE

0163366

FIG. 8A

326

INTENSITY VS. AZIMUTHAL ANGLE

FIG. 8B

332

INTENSITY VS. AZIMUTHAL ANGLE

FIG. 8C

328

INTENSITY VS. AZIMUTHAL ANGLE

FIG. 8D

334

INTENSITY VS. AZIMUTHAL ANGLE

FIG. 8E

330

INTENSITY VS. AZIMUTHAL ANGLE

FIG. 8F

336

INTENSITY VS. AZIMUTHAL ANGLE

0163366

FIG. 9A

338

INTENSITY VS. AZIMUTHAL ANGLE

FIG. 9B

344

INTENSITY VS. AZIMUTHAL ANGLE

FIG. 9C

340

INTENSITY VS. AZIMUTHAL ANGLE

FIG. 9D

346

INTENSITY VS. AZIMUTHAL ANGLE

FIG. 9E

342

INTENSITY VS. AZIMUTHAL ANGLE

FIG. 9F

348

INTENSITY VS. AZIMUTHAL ANGLE

0163366

5/5

FIG.10A

FIG.10B

FIG.10C

FIG.10D

FIG.11A

FIG.11B

European Patent
Office

**EUROPEAN SEARCH REPORT**

| | DOCUMENTS CONSIDERED TO BE RELEVANT | | EP 85301489.2 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | US - A - 4 239 349 (SCHEFFER)<br>* Abstract; fig. 1-3 *<br>-- | 1,4,5, 7,10- 14,19 | G 02 F 1/03<br>G 02 F 1/13 |
| A | US - A - 4 416 514 (PLUMMER)<br>* Fig. 1,7; Summary *<br>-- | 1-4,6- 8,10, 12-15, 18 | |
| A | APPLIED OPTICS, vol. 19, no. 13, July 1, 1980,<br><br>D. ARMITAGE "Liquid crystal voltage controlled retardation display" pages 2235-2238<br>* Chap. I, IV, V; fig. 6,7 *<br>-- | 1,7 | |
| D,A | US - A - 4 385 806 (FERGASON)<br>* Fig. 1,2; column 1, lines 31- 59; column 6, line 54 - column 7, line 6 *<br>-- | 1,4,7, 10 | **TECHNICAL FIELDS SEARCHED (Int Cl 4)**<br><br>G 02 F 1/00 |
| A | US - A - 3 923 379 (KUMADA)<br>* Fig. 1-4; column 5, line 20 - column 7, line 6 *<br>---- | 1,4,5, 7,10, 11 | |

The present search report has been drawn up for all claims

| Place of search | Date of completion of the search | Examiner |
|---|---|---|
| VIENNA | 08-07-1985 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82